(19) Europäisches Patentamt

European Patent Office

Office européen des brevets

(11) **EP 1 833 139 A2**

(12) **EUROPEAN PATENT APPLICATION**

(43) Date of publication:
**12.09.2007 Bulletin 2007/37**

(51) Int Cl.:
***H02K 1/18*** *(2006.01)*

(21) Application number: **07103755.0**

(22) Date of filing: **08.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.03.2006 JP 2006066015**

(71) Applicant: **Kabushiki Kaisha Toyota Jidoshokki Kariya-shi, Aichi 448-8671 (JP)**

(72) Inventors:
• **Fukasaku, Hiroshi**
  **Kariya-shi, Aichi 448-8671 (JP)**
• **Mera, Minoru**
  **Kariya-shi, Aichi 448-8671 (JP)**
• **Saeki, Ai**
  **Kariya-shi, Aichi 448-8671 (JP)**

(74) Representative: **TBK-Patent**
**Bavariaring 4-6**
**80336 München (DE)**

(54) **Electric motor and method of manufacturing the same**

(57) An electric motor includes an annular housing and an annular stator core having the inner periphery the shape of which differs from a perfect circle. The stator core is supported by the housing in such a manner that the outer periphery of the stator core and the inner periphery of the housing are partially in contact with each other. The inner periphery of the stator core is deformed to become close to the shape of the perfect circle when the stator core is securely fitted in the housing by shrink fitting.

# FIG. 2A

EP 1 833 139 A2

## Description

### BACKGROUND OF THE INVENTION

The present invention relates to an electric motor and a motor-driven compressor.

Shrink fitting is used for securely fitting the stator core of an electric motor in a housing (cf. Japanese Patent Application Publication No. 2005-214160). Japanese Patent Application Publication No. 2005-214160 discloses that a particular relation between the inner diameter of the housing which is made of an aluminum-based material and fastening interference is set for securely fitting the stator core in the housing.

However, it is hard to securely fit the stator core in the housing so that the inner periphery of the housing is evenly joined to the outer periphery of the stator core. For that purpose, it is preferable that a plurality of press-contact holding portions should be circumferentially provided on the inner periphery of the housing so as to contact with the outer periphery of the stator core, thereby holding the stator core, as disclosed in Japanese Patent Application Publication No. 2005-127152.

However, a plurality of the press-contact holding portions which are in contact with the outer periphery of the stator core may be circumferentially spaced at irregular intervals as shown in FIG. 1 of Japanese Patent Application Publication No. 2005-127152. In such a case, the shape of the stator core tends to be unevenly deformed by shrink fitting, so that the inner periphery of the stator core (or the distal end surfaces of the teeth which face the outer periphery of the rotor) may be deformed from a perfect circle. If so, the interval between the inner periphery of the stator core and the outer peripheral surface of the rotor becomes uneven throughout the outer periphery of the rotor. This causes vibrations of the housing of the rotating electric motor to be increased.

An objective of the present invention is to improve evenness of the interval between the inner periphery of a stator core (or the distal end surfaces of teeth which face the outer periphery of a rotor) and the outer peripheral surface of the rotor.

### SUMMARY OF THE INVENTION

A first aspect according to the present invention provides an electric motor which includes an annular housing and an annular stator core having the inner periphery the shape of which differs from a perfect circle. The stator core is supported by the housing in such a manner that the outer periphery of the stator core and the inner periphery of the housing are partially in contact with each other. The inner periphery of the stator core is deformed to become close to the shape of the perfect circle when the stator core is securely fitted in the housing by shrink fitting.

A second aspect according to the present invention provides a method of manufacturing an electric motor having an annular stator core and an annular housing. The method includes the steps of: forming the stator core having the inner periphery the shape of which differs from a perfect circle; and securing the stator core to the housing in such a manner that the inner periphery of the stator core is deformed to become close to the shape of the perfect circle by shrink fitting.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:

FIG., 1 is a longitudinal cross-sectional view of a compressor according to a first preferred embodiment of the present invention;

FIG. 2A is a cross-sectional view of a motor housing and a stator core according to the first preferred embodiment;

FIG. 2B is a schematic view showing a relation between the shapes of the outer periphery of the stator core before and after shrink fitting and a relation between the shapes of the inner periphery of the stator core before and after the shrink fitting according to the first preferred embodiment;

FIG. 2C is a schematic view showing a relation between the shapes of the outer periphery of a conventional stator core before and after the shrink fitting and a relation between the shapes of the inner periphery of the conventional stator core before and after the shrink fitting;

FIG. 3A is a graph showing a relation among the rotational speed of an electric motor having the conventional stator core, the acceleration of the electric motor and vibrations of the motor housing;

FIG. 3B is a graph showing a relation among the rotational speed of an electric motor having the stator core, the acceleration of the electric motor and vibrations of the motor housing according to the first preferred embodiment;

FIG. 4A is a cross-sectional view of a motor housing and a stator core according to a second preferred embodiment of the present invention;

FIG. 4B is a schematic view showing a relation between the shapes of the outer periphery of the stator core before and after the shrink fitting and a relation between the shapes of the inner periphery of the stator core before and after the shrink fitting according to the second preferred embodiment;

FIG. 5A is a cross-sectional view of a motor housing and a stator core according to a third preferred embodiment of the present invention;

FIG. 5B is a schematic view showing a relation between the shapes of the outer periphery of the stator core before and after the shrink fitting and a relation between the shapes of the inner periphery of the stator core before and after the shrink fitting according to the third preferred embodiment;

FIG. 6A is a cross-sectional view of a motor housing and a stator core according to a fourth preferred embodiment of the present invention;

FIG. 6B is a schematic view showing a relation between the shapes of the outer periphery of the stator core before and after the shrink fitting and a relation between the shapes of the inner periphery of the stator core before and after the shrink fitting according to the fourth preferred embodiment;

FIG. 7A is a cross-sectional view of a motor housing and a stator core according to a fifth preferred embodiment of the present invention;

FIG. 7B is a schematic view showing a relation between the shapes of the outer periphery of the stator core before and after the shrink fitting and a relation between the shapes of the inner periphery of the stator core before and after the shrink fitting according to the fifth preferred embodiment;

FIG. 8A is a cross-sectional view of a motor housing and a stator core according to a sixth preferred embodiment of the present invention; and

FIG. 8B is a schematic view showing a relation between the shapes of the outer periphery of the stator core before and after the shrink fitting and a relation between the shapes of the inner periphery of the stator core before and after the shrink fitting according to the sixth preferred embodiment.

DETAILED DESCRIPTION OF THE PREFERRED EMBODIMENTS

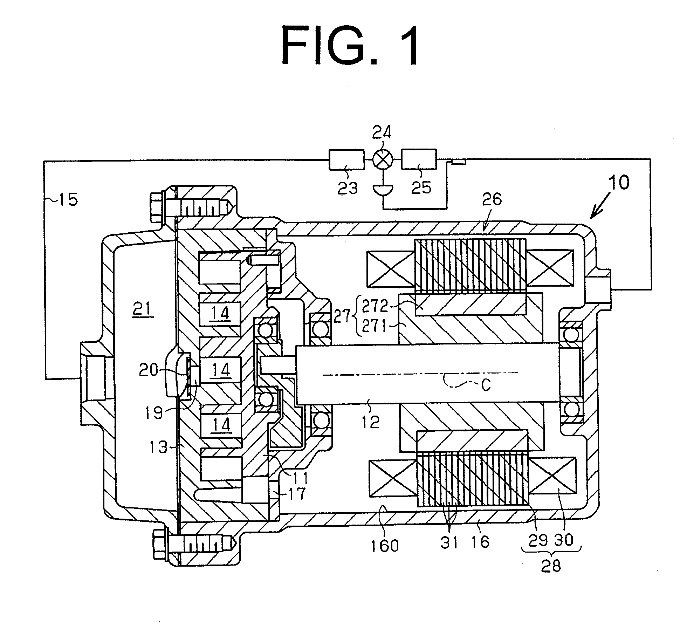

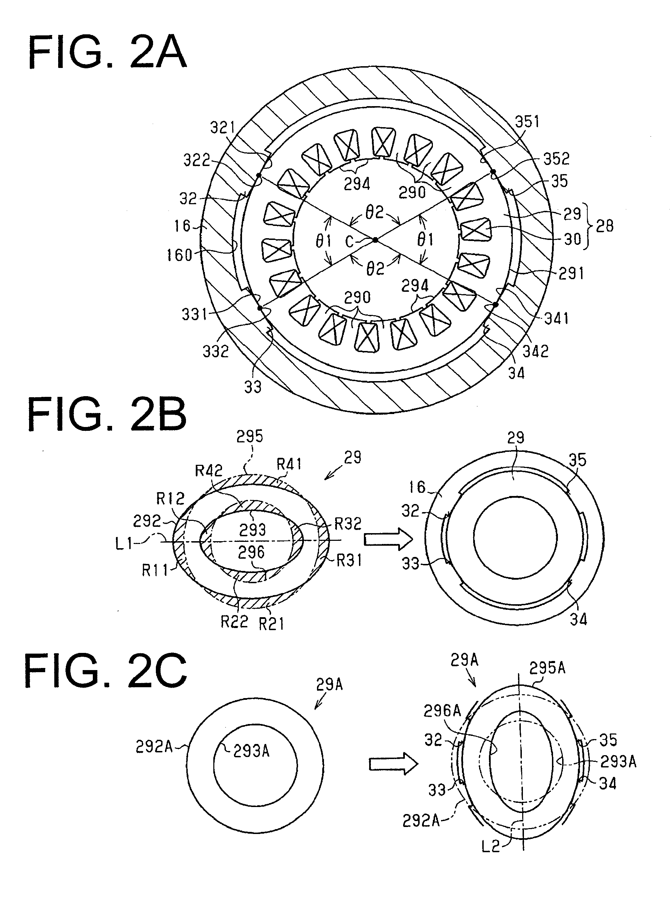

The following will describe a first preferred embodiment according to the present invention with reference to FIGS. 1 through 3. Referring to FIG. 1, a scroll type motor-driven compressor 10 has a movable scroll member 11 as a compression motion body, a fixed scroll member 13, an annular motor housing 16 as an annular housing and an electric motor 26 which includes a rotary shaft 12. The movable scroll member 11 is orbited as the rotary shaft 12 is rotated, thereby reducing the volume of compression chambers 14 between the movable and fixed scroll members 11 and 13. A refrigerant gas which is introduced from an external refrigerant circuit 15 into the motor housing 16 is drawn into the compression chamber 14 through a suction port 17. The refrigerant gas in the compression chamber 14 is discharged through a discharge port 19 into a discharge chamber 21 pushing open a discharge valve 20. The refrigerant gas in the discharge chamber 21 flows out of the compressor 10 to the external refrigerant circuit 15 and returns into the motor housing 16.
A heat exchanger or a condenser 23 for removing heat from the refrigerant, an expansion valve 24 and a heat exchanger or an evaporator 25 for transferring the ambient heat to the refrigerant are provided in the external refrigerant circuit 15. A rotor 27 is provided on the rotary shaft 12 in the motor housing 16, and a stator 28 is provided on the inner peripheral surface 160 of the motor housing 16. The rotor 27 includes a rotor core 271 which is fixed on the rotary shaft 12 and a plurality of permanent magnets 272 which are provided on the periphery of the rotor core 271. The magnetic poles of any two of the circumferentially adjacent permanent magnets 272 which face the stator 28 are different from each other.
Referring to FIG. 2A, the stator 28 includes an annular stator core 29 and coils 30 which are wound around the stator core 29. A plurality of teeth 290 are formed on the inner periphery of the stator core 29 and spaced at regular pitches. The teeth 290 have distal end surfaces 294 which face the outer peripheral surface of the rotor 27 and are circular arc surfaces coaxial with a central axis C of the rotor 27. The rotor 27 is rotated as the coils 30 are supplied with electric current. The rotary shaft 12 and the movable scroll member 11 rotate with the rotor 27, accordingly. Energization of the coils 30 is performed by switching of an inverter (not shown). The rotor 27 and the stator 28 comprise the electric motor 26. As shown in FIG. 1, the stator core 29 is formed by laminating a plurality of core plates 31 which are made of a metallic magnetic material.
Referring to FIG. 2A, the motor housing 16 has a plurality of support projections 32 through 35 (four in the first preferred embodiment) which are integrally formed on the inner peripheral surface 160 thereof. The inner peripheral surface 160 of the motor housing 16 is a circumferential shape, and the support projections 32 through 35 are in contact with the outer peripheral surface 291 of the stator core 29 which is a circumferential shape throughout the thickness of the stator core 29 in the direction of the central axis C. More specifically, the stator core 29 is supported at a plurality of points of the outer periphery thereof (four points in the first preferred embodiment) by the support projections 32 through 35. In other words, the stator core 29 is supported by the motor housing 16 in such a manner that a part of the inner periphery of the motor housing 16 is in contact with a part of the outer periphery of the stator core 29. The motor housing 16 is a housing which supports the stator core 29.

The support projections 32 through 35 have distal end surfaces 321, 331, 341 and 351 which are formed as planar surfaces. The distal end surfaces 321, 331, 341 and 351 are in contact at their centers 322, 332, 342 and 352 in width direction with the outer peripheral surface 291 of the stator core 29. The centers 322, 332, 342 and 352 are located on a circle which is coaxial with the central axis C of the rotor 27.

The stator core 29 is securely fitted in the motor housing 16 by shrink fitting. More specifically, after the motor housing 16 is expanded by heat, the stator core 29 is inserted into the motor housing 16. Then, the motor housing 16 shrinks while being cooled to room temperature, thereby fixing the stator core 29 therein.

An angular interval θ1 between the centers 322 and 332 of the support projections 32 and 33 about the central axis C is equal to an angular interval between the centers 342 and 352 of the support projections 34 and 35 about the central axis C. An angular interval θ2 between the centers 322 and 352 of the support projections 32 and 35 about the central axis C is equal to an angular interval between the centers 332 and 342 of the support projections 33 and 34 about the central axis C. The angular interval θ1 between the centers 322 and 332 and between the centers 342 and 352 is set smaller than the angular interval θ2 between the centers 322 and 352 and between the centers 332 and 342. More specifically, the angular intervals θ1 and θ2 have a relation therebetween as follows:

$$\theta 1 < 90° < \theta 2.$$

In addition, the centers 322 and 342 and the central axis C are located on a line, and the centers 332 and 352 and the central axis C are located on another line.

In other words, the intervals between the adjacent support projections 32 and 33 and between the adjacent support projections 34 and 35 are smaller than those between the support projection 32 and the support projection 35 and between the support projection 33 and the support projection 34. Hereinafter, a pair of the support projections 32 and 33 is referred to as a first pair thereof, and a pair of the support projections 34 and 35 is referred to as a second pair thereof. The intervals between the first pair of support projections 32 and 33 and between the second pair of support projections 34 and 35 are smaller than the intervals between the support projection 32 and the support projection 35 adjacent to each other and between the support projection 33 and the support projection 34 adjacent to each other.

The angular interval θ2 between the support projections 32 and 35 is set larger than 90° in order to ensure sufficient space for providing an inverter (not shown) at a part of the motor housing 16 between the projections 32 and 35 and providing a cooling device which cools the inverter on the inner peripheral side of the above part of the motor housing 16. The angular interval θ2 between the support projections 33 and 34 is set equal to the angular interval θ2 between the support projections 32 and 35, and the angular interval θ1 between the support projections 32 and 33 is set equal to the angular interval θ1 between the support projections 34 and 35. Thereby, the arrangement of the support projections 32 through 35 are vertically and bilaterally symmetrical.

FIG. 2B is a schematic view showing a relation between the shapes of the outer periphery of the stator core 29 before and after the shrink fitting and a relation between the shapes of the inner periphery of the stator core 29 before and after the shrink fitting. Referring to FIG. 2B, a solid annular line 292 indicates the cross-sectional shape of the outer peripheral surface 291 of the stator core 29 before the shrink fitting, and a solid annular line 293 is an annular line which overlaps with the distal end surfaces 294 of the teeth 290 before the shrink fitting. The annular lines 292 and 293 have an elliptic shape having a major axis L1 which passes through an intermediate point between the centers 322 and 332 of the support projections 32 and 33 and through an intermediate point between the centers 342 and 352 of the support projections 34 and 35. In other words, the shape of the stator core 29 is an elliptic cylindrical shape before the shrink fitting. A dotted annular line 295 indicates the cross-sectional shape of the outer peripheral surface 291 of the stator core 29 after the shrink fitting, and a dotted annular line 296 is an annular line which overlaps with the distal end surfaces 294 of the teeth 290 after the shrink fitting. The annular line 296 indicates the shape of the inner peripheral surface of the stator core 29 after the shrink fitting.

It is noted that degree of the deformation of the stator core 29 from the annular line 292 to the annular line 295 is exaggeratedly shown and degree of the deformation of the stator core 29 from the annular line 293 to the annular line 296 is also exaggeratedly shown. Degree of the deformation at the most deformed part ranges from several tens of micrometers to several hundreds of micrometers.

Regions R11, R21, R31 and R41 indicated by oblique lines are regions corresponding to degree of the deformation of the outer peripheral surface 291 of the stator core 29 by the shrink fitting. Regions R12, R22, R32 and R42 are regions corresponding to degree of the deformation of the inner peripheral surface of the stator core 29 (or the annular line 296) by the shrink fitting. More specifically, the shape of the stator core 29 before the shrink fitting is determined by factoring pre-calculated degree of the deformation of the stator core 29 by the shrink fitting into the shape of the stator core 29 after the shrink fitting. In other words, the shape of the stator core 29 before the shrink fitting is determined so that the shape of the inner periphery of the stator core 29 is deformed by the shrink fitting to become close to a perfect circle after the shrink fitting. The annular line 296 which overlaps with the distal end surfaces 294 of the teeth 290 after the shrink fitting is closer to a perfect circle in shape than the annular line 293 (or an ellipse) which overlaps with the distal end surfaces 294 of the teeth 290 before the shrink fitting. The outer peripheral surface 291 of the stator core 29 after the shrink fitting is closer to a perfect circle in shape than the annular line 292 (or an ellipse) which overlaps with the outer peripheral surface 291 of the stator core 29 before the shrink fitting.

The first preferred embodiment offers the following advantageous effects.

(1) The distal end surfaces 294 of the tooth 290 after the shrink fitting overlap with the annular line 296 which is closer to a perfect circle in shape than the annular line 293. In other words, the shape of the stator core 29 before the shrink fitting is determined by factoring degree of the deformation of the stator core 29 by the shrink fitting so that the shape of the inner periphery of the stator core 29 (or the shape indicated by the annular line 296 which overlaps with the distal end surfaces 294 of the teeth 290) after the shrink fitting becomes close to a perfect circle. Thus, the degree of the deformation is absorbed by the shrink fitting, so that the shape of the stator core 29 after the shrink fitting becomes close to a perfect circle. Namely, when the annular line 293 which overlaps with the distal end surfaces 294 of the teeth 290 before the shrink fitting has an elliptic shape, the annular line 296 which overlaps with the distal end surfaces 294 of the teeth 290 after annular fitting is closer to a perfect circle in shape than that in the case where the annular line 293 has a perfect circular shape before the shrink fitting. As a result, evenness of the interval between the inner periphery of the stator core 29 (or the distal end surfaces 294 of the teeth 290) and the outer peripheral surface of the rotor 271 is improved.

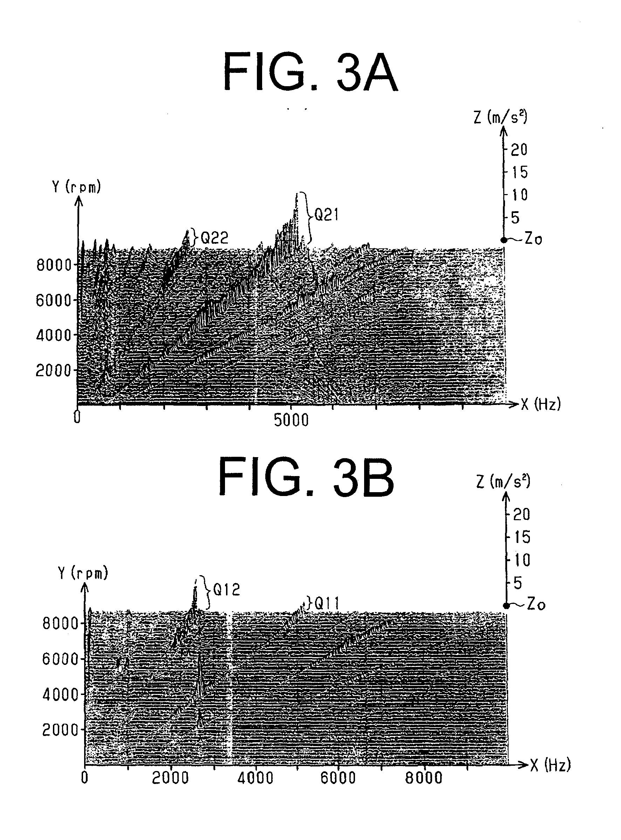

(2) FIG. 3B is a graph plotting experimental data and showing a relation among rotational speed of the electric motor 26 of the first preferred embodiment which has the stator core 29 whose outer and inner peripheries have an elliptic shape before the shrink fitting, frequency of vibrations of the motor housing 16 of the electric motor 26 and acceleration of the electric motor 26. In the graph in FIG. 3B, an X-axis indicates the frequency of the vibrations which the motor housing 16 of the electric motor 26 generates, a Y-axis indicates the rotational speed of the electric motor 26, and a Z-axis indicates the acceleration of the motor housing 16 of the electric motor 26. A starting point Zo of the Z-axis indicates the acceleration of zero. The height of the waveform in the graph in FIG. 3B, for example, indicated by symbols Q11 and Q12, schematically indicates magnitude of the acceleration of the electric motor 26.

FIG. 3A is a graph plotting experimental data and showing a relation among rotational speed of an electric motor (referred to as electric motor 26A) which has a conventional stator core (designated at 29A in FIG. 2C) whose outer and inner peripheries have a perfect circular shape before the shrink fitting, frequency of vibrations of the motor housing 16 of the electric motor 26A and acceleration of the electric motor 26A. In the graph in FIG. 3A, an X-axis indicates the frequency of the vibrations which the motor housing 16 of the electric motor 26A generates, a Y-axis indicates the rotational speed of the electric motor 26A, and a Z-axis indicates the acceleration of the motor housing 16 of the electric motor 26A. A starting point Zo of the Z-axis indicates the acceleration of zero. The height of the waveform in the graph in FIG. 3A, for example, indicated by symbols Q21 and Q22, schematically indicates magnitude of the acceleration of the electric motor 26A. As clearly seen in FIGS. 3A and 3B, the vibrations which the motor housing 16 of the electric motor 26 generates is smaller than that of the electric motor 26A.

(3) It is assumed that the stator core 29A whose outer peripheral surface has a perfect circular shape before the shrink fitting is fixed by the shrink fitting in the motor housing 16 which has at the inner peripheral surface 160 thereof four support projections 32 through 35. Referring to FIG. 2C, a solid annular line 292A indicates the cross-sectional shape of the outer peripheral surface of the stator core 29A before the shrink fitting, and a solid annular line 293A indicates the cross-sectional shape of the inner peripheral surface of the stator core 29A before the shrink fitting. The annular lines 292A and 293A are coaxial with each other.

By the shrink fitting, the stator core 29A is deformed so that a part of the stator core 29A between the support projections 32 and 33 and a part of the stator core 29A between the support projections 34 and 35 are moved inwardly radially. By the shrink fitting, the stator core 29A is also deformed so that a part of the stator core 29A between the support projections 32 and 35 and a part of the stator core 29A between the support projections 33 and 34 are moved outwardly radially.

FIG. 2C is a schematic view showing a relation between the shapes of the outer periphery of the stator core 29A before and after the shrink fitting and a relation between the shapes of the inner periphery of the stator core 29A before and after the shrink fitting. Referring to FIG. 2C, a solid annular line 295A indicates the cross-sectional shape of the outer peripheral surface of the stator core 29A after the shrink fitting, and a solid annular line 296A indicates the cross-sectional shape of the inner peripheral surface of the stator core 29A after the shrink fitting. The annular lines 295A and 296A have an elliptic shape having a major axis L2 which passes through an intermediate point between the centers 322 and 352 of the support projections 32 and 35 and through an intermediate point between the centers 332 and 342 of the support projections 33 and 34. Namely, the shape of the stator core 29A after the shrink fitting is an elliptic cylindrical shape.

It is noted that degree of the deformation of the stator core 29A from the annular line 292A to the annular line 295A is exaggeratedly shown and degree of the deformation of the stator core 29A from the annular line 293A to the annular line 296A is also exaggeratedly shown. Degree of the deformation at the most deformed part ranges from several tens of micrometers to several hundreds of micrometers.

When the stator core whose outer peripheral surface 291 has a perfect circular shape is fixed by the shrink fitting, the outer peripheral surface 291 of the stator core is deformed from a perfect circular shape to an elliptic shape. In this case, the elliptic shape has the major axis L2 which passes through the intermediate point between the centers 322 and 352 of the support projections 32 and 35 and through the intermediate point between the centers 332 and 342 of the support projections 33 and 34.

In the first preferred embodiment, the cross-sectional shape of the outer peripheral surface 291 of the stator core 29 before the shrink fitting (or the shape indicated by the annular line 292) and the shape of the inner periphery of the stator core 29 (or the shape indicated by the annular line 293 which overlaps with the distal end surfaces 294 of the teeth 290) are an elliptic shape having the major axis L1 which passes through the intermediate point between the centers 322 and 332 of the support projections 32 and 33 and through the intermediate point between the centers 342 and 352 of the support projections 34 and 35. In other words, the shape of the stator core 29 before the shrink fitting is an elliptic cylindrical shape having the major axis L1 which passes through the intermediate point between the centers 322 and 332 of the support projections 32 and 33 and through the intermediate point between the centers 342 and 352 of the support projections 34 and 35. By using such an elliptic cylindrical shape, the ellipse is shrunk in the direction of the major axis L1 thereof and stretched in the direction of the minor axis thereof after the shrink fitting, so that the circularity of the stator core 29 is enhanced. In a structure in which the stator core is fixed by the shrink fitting in the motor housing 16 having at the inner peripheral surface 160 thereof the four support projections 32 through 35 with the above relation between the angular intervals θ1 and θ2, the elliptic cylindrical shape is simple for the shape of the stator core 29 before the shrink fitting.

(4) The electric motor 26 of the present invention which can reduce noise which is caused by the vibrations of high frequency is suited for a drive source of a compressor.

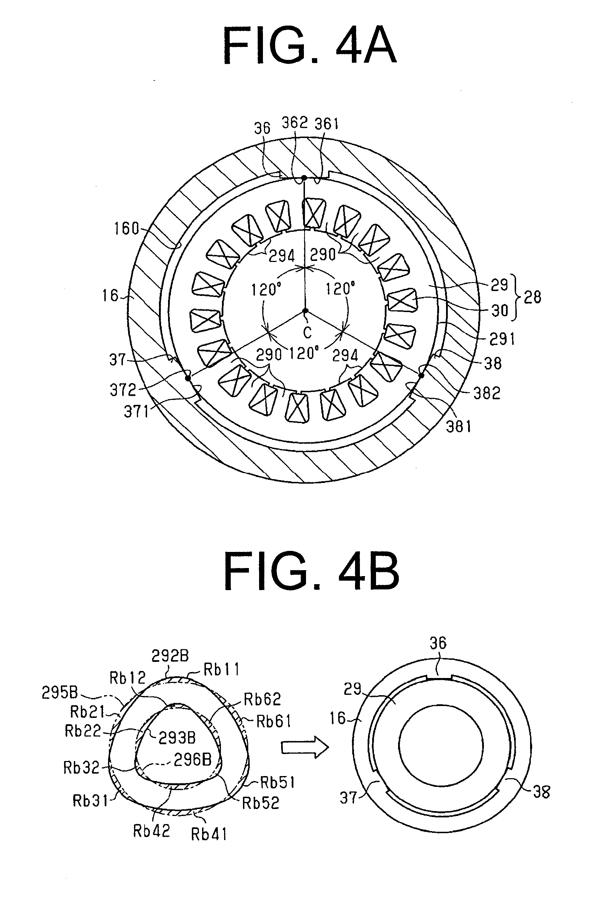

The following will describe a second preferred embodiment according to the present invention with reference to FIGS. 4A and 4B. The same reference numerals denote substantially similar components to those of the first preferred embodiment.

Referring to FIG. 4A, the motor housing has three support projections 36 through 38 which are integrally formed on the inner peripheral surface 160 thereof. The support projections 36 through 38 have distal end surfaces 361, 371 and 381 which are formed as planar surfaces, and the centers 362, 372 and 382 of the distal end surfaces 361, 371 and 381 in width direction are spaced at regular angular intervals of 120 degrees about the central axis C. The stator core 29 is supported at the outer periphery thereof by the three support projections 36 through 38.

Referring to FIG. 4B, a solid annular line 292B indicates the cross-sectional shape of the outer peripheral surface 291 of the stator core 29 before the shrink fitting, and a solid annular line 293B is an annular line which overlaps with the distal end surfaces 294 of the teeth 290 before the shrink fitting. A dotted annular line 295B indicates the cross-sectional shape of the outer peripheral surface 291 of the stator core 29 after the shrink fitting, and a dotted annular line 296B is an annular line which overlaps with the distal end surfaces 294 of the teeth 290 after the shrink fitting. The annular line 296B indicates the shape of the inner peripheral surface of the stator core 29 after the shrink fitting. In this embodiment, the stator core 29 has in cross-section three large radius portions which correspond to the support projections 36 through 38 after the shrink fitting.

Regions Rb11, Rb21, Rb31, Rb41, Rb51 and Rb61 indicated by oblique lines are regions corresponding to degree of the deformation of the outer peripheral surface 291 of the stator core 29 by the shrink fitting. Regions Rb12, Rb22, Rb32, Rb42, Rb52 and Rb62 indicated by oblique lines are regions corresponding to degree of the deformation of the inner peripheral surface of the stator core 29 by the shrink fitting. More specifically, the shape of the stator core 29 before the shrink fitting is determined by factoring pre-calculated degree of the deformation of the stator core 29 by the shrink fitting into the shape of the stator core 29 after the shrink fitting so that the shape of the inner periphery of the stator core 29 after the shrink fitting becomes close to a perfect circle.

The second preferred embodiment offers the same advantageous effects as mentioned in the paragraph (1) of the first preferred embodiment. Furthermore, the structure of supporting the stator core 29 at three points is most stable manner for supporting the stator core 29.

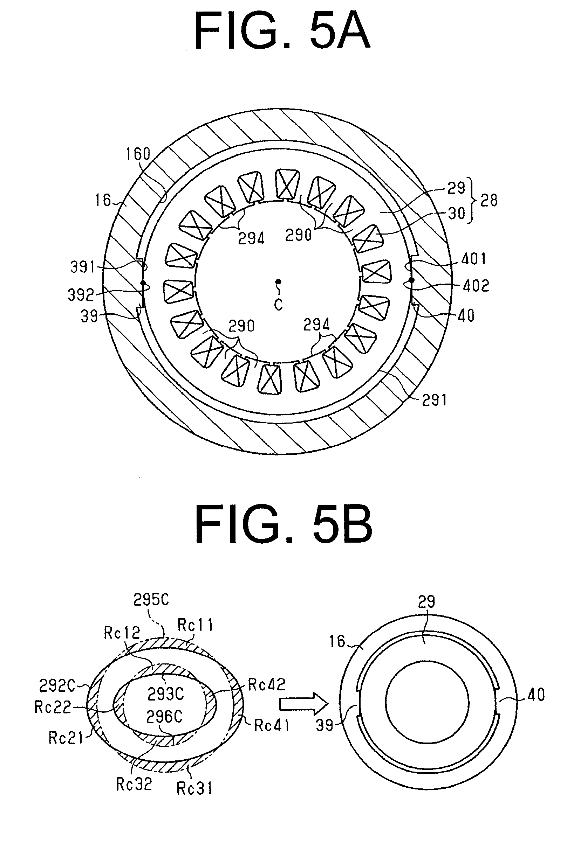

The following will describe a third preferred embodiment according to the present invention with reference to FIGS. 5A and 5B. The same reference numerals denote substantially similar components to those of the first preferred embodiment.

Referring to FIG. 5A, the motor housing 16 has two support projections 39 and 40 which are integrally formed on the inner peripheral surface 160 thereof. The support projections 39 and 40 have distal end surfaces 391 and 401 which are formed as planar surfaces, and the centers 391 and 401 of the support projections 39 and 40 in width direction are spaced at regular angular intervals of 180 degrees about the central axis C of the rotor 27. The stator core 29 is supported at the outer periphery thereof by the two support projections 39 and 40.

Referring to FIG. 5B, a solid annular line 292C indicates the cross-sectional shape of the outer peripheral surface 291 of the stator core 29 before the shrink fitting, and a solid annular line 293C is an annular line which overlaps with the distal end surfaces 294 of the teeth 290 before the shrink fitting. A dotted annular line 295C indicates the cross-sectional shape of the outer peripheral surface 291 of the stator core 29 after the shrink fitting, and a dotted annular line 296C is an annular line which overlaps with the distal end surfaces 294 of the teeth 290 after the shrink fitting. The annular line 296C indicates the shape of the inner peripheral surface of the stator core 29 after the shrink fitting.

Regions Rc11, Rc21, Rc31 and Rc41 indicated by oblique lines are regions corresponding to degree of the deformation of the outer peripheral surface 291 of the stator core 29 by the shrink fitting. Regions Rc12, Rc22, Rc32 and Rc42 indicated by oblique lines are regions corresponding to degree of the deformation of the inner peripheral surface of the stator core 29 by the shrink fitting. More specifically, the shape of the stator core 29 before the shrink fitting is determined by factoring pre-calculated degree of the deformation of the stator core 29 by the shrink fitting into the shape of the stator core 29 after the shrink fitting so that the shape of the inner periphery of the stator core 29 after the shrink fitting becomes close to a perfect circle.

The third preferred embodiment offers the same advantageous effects as mentioned in the paragraph (1) of the first preferred embodiment.

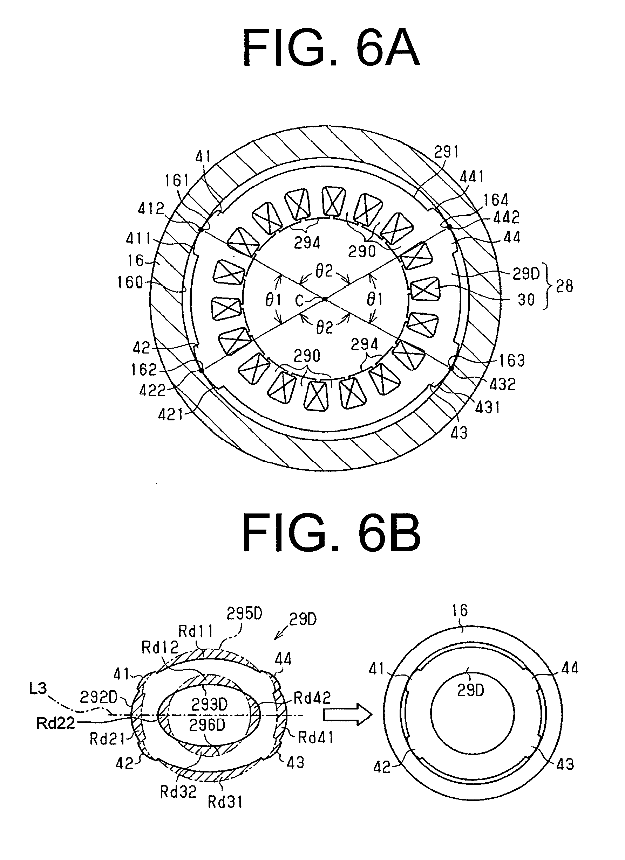

The following will describe a fourth preferred embodiment according to the present invention with reference to FIGS. 6A and 6B. The same reference numerals denote substantially similar components to those of the first preferred embodiment.

Referring to FIG. 6A, a stator core 29D has four supported projections 41 through 44 which are integrally formed on the outer peripheral surface 291 thereof. The supported projection 41 through 44 have distal end surfaces 411, 421, 431 and 441 which are formed in a circular arc shape having a curvature larger than that of the inner peripheral surface 160 of the motor housing 16. Thus, the distal end surfaces 411, 421, 431 and 441 are in contact at their centers 412, 422, 432 and 442 in width direction with the inner peripheral surface 160 of the motor housing 16. In other words, the stator core 29D is supported at four points of the outer periphery thereof by the contact parts 161 through 164 of the motor housing 16. The stator core 29D is supported by the motor housing 16 in such a manner that a part of the inner periphery of the motor housing 16 is in contact with a part of the outer periphery of the stator core 29D.

The centers 412, 422, 432 and 442 of the distal end surfaces 411, 421, 431 and 441 are arranged in a similar manner as the centers 322, 332, 342 and 352 of the support projections 32 through 35 in the first preferred embodiment. More specifically, the intervals between the adjacent supported projections 41 and 42 and between the adjacent supported projections 43 and 44 are smaller than those between the supported projection 41 and the supported projection 44 and between the supported projection 42 and the supported projection 43. Hereinafter, a pair of the supported projections 41 and 42 is referred to as a first pair thereof, and a pair of the supported projections 43 and 44 is referred to as a second pair thereof. The intervals between the first pair of supported projections 41 and 42 and between the second pair of supported projections 43 and 44 are smaller than the intervals between the supported projection 41 and the supported projection 44 adjacent to each other and between the supported projection 42 and the supported projection 43 adjacent to each other.

Referring to FIG. 6B, a solid annular line 292D indicates the cross-sectional shape of the outer peripheral surface 291 of the stator core 29D before the shrink fitting, and a solid annular line 293D is an annular line which overlaps with the distal end surfaces 294 of the teeth 290 before the shrink fitting. The annular lines 292D and 293D have an elliptic shape having a major axis L3 which passes through an intermediate point between the centers 412 and 422 of the supported projections 41 and 42 and through an intermediate point between the centers 432 and 442 of the supported projections 43 and 44. In other words, the shape of the stator core 29D is an elliptic cylindrical shape before the shrink fitting. A dotted annular line 295D indicates the cross-sectional shape of the outer peripheral surface 291 of the stator core 29D after the shrink fitting, and a dotted annular line 296D is an annular line which overlaps with the distal end surfaces 294 of the teeth 290 after the shrink fitting. The annular line 296D indicates the shape of the inner peripheral surface of the stator core 29D after the shrink fitting.

Regions Rd11, Rd21, Rd31 and Rd41 indicated by oblique lines are regions corresponding to degree of the deformation of the outer peripheral surface 291 of the stator core 29D by the shrink fitting. Regions Rd12, Rd22, Rd32 and Rd42 indicated by oblique lines are regions corresponding to degree of the deformation of the inner peripheral surface of the stator core 29D by the shrink fitting. More specifically, the shape of the stator core 29D before the shrink fitting is determined by factoring pre-calculated degree of the deformation of the stator core 29D by the shrink fitting into the shape of the stator core 29D after the shrink fitting so that the shape of the inner periphery of the stator core 29D after the shrink fitting becomes close to a perfect circle.

The fourth preferred embodiment offers the same advantageous effects as mentioned in the paragraphs (1) and (3) in the second preferred embodiment.

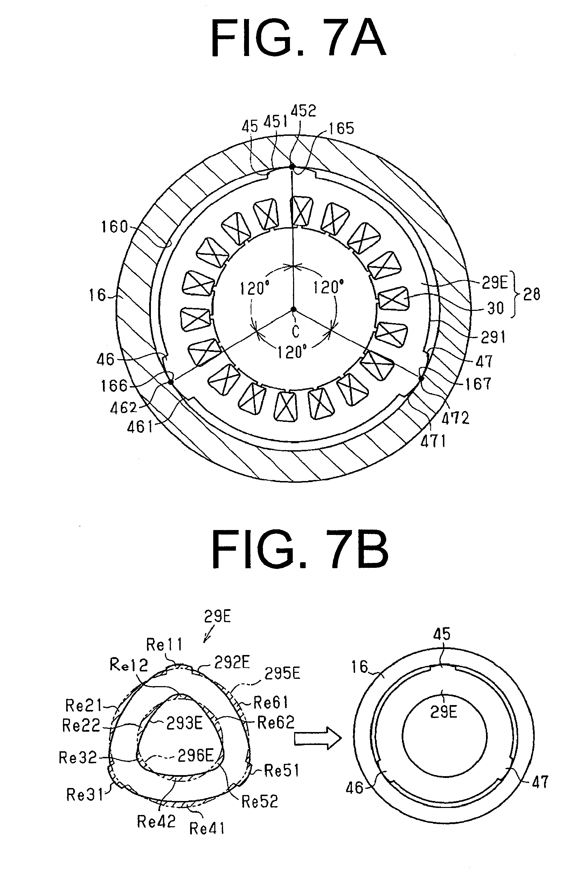

The following will describe a fifth preferred embodiment according to the present invention with reference to FIGS. 7A and 7B. The same reference numerals denote substantially similar components to those of the first preferred embodiment.

Referring to FIG. 7A, a stator core 29E has three supported projections 45 through 47 which are integrally formed on the outer peripheral surface 291 thereof. The supported projections 45 through 47 have distal end surfaces 451, 461 and 471 which are formed in a circular arc shape having a curvature larger than that of the inner peripheral surface 160 of the motor housing 16. Thus, the distal end surfaces 451, 461 and 471 are in contact at their centers 452, 462 and 472 in width direction with the inner peripheral surface 160 of the motor housing 16. In other words, the stator core 29E is supported at three points of the outer periphery thereof by the contact parts 165 through 167 of the motor housing 16. The centers 452, 462 and 472 of the distal end surfaces 451, 461 and 471 are arranged in a similar manner as the centers 362, 372 and 382 of the support projections 36 through 38 in the second preferred embodiment.

Referring to FIG. 7B, a solid annular line 292E indicates the cross-sectional shape of the outer peripheral surface 291 of the stator core 29E before the shrink fitting, and a solid annular line 293E is an annular line which overlaps with the distal end surfaces 294 of the teeth 290 before the shrink fitting. A dotted annular line 295E indicates the cross-sectional shape of the outer peripheral surface 291 of the stator core 29E after the shrink fitting, and a dotted annular line 296E is an annular line which overlaps with the distal end surfaces 294 of the teeth 290 after the shrink fitting. The annular line 296E indicates the shape of the inner peripheral surface of the stator core 29E after the shrink fitting.

Regions Re11, Re21, Re31, Re41, Re51 and Re61 indicated by oblique lines are regions corresponding to degree of the deformation of the outer peripheral surface 291 of the stator core 29E by the shrink fitting. Regions Re12, Re22, Re32, Re42, Re52 and Re53 indicated by oblique lines are regions corresponding to degree of the deformation of the inner peripheral surface of the stator core 29E by the shrink fitting. More specifically, the shape of the stator core 29E before the shrink fitting is determined by factoring pre-calculated degree of the deformation of the stator core 29E by the shrink fitting into the shape of the stator core 29E after the shrink fitting so that the shape of the inner periphery of the stator core 29E after the shrink fitting becomes close to a perfect circle.

The fifth preferred embodiment offers the same advantageous effects as the second preferred embodiment.

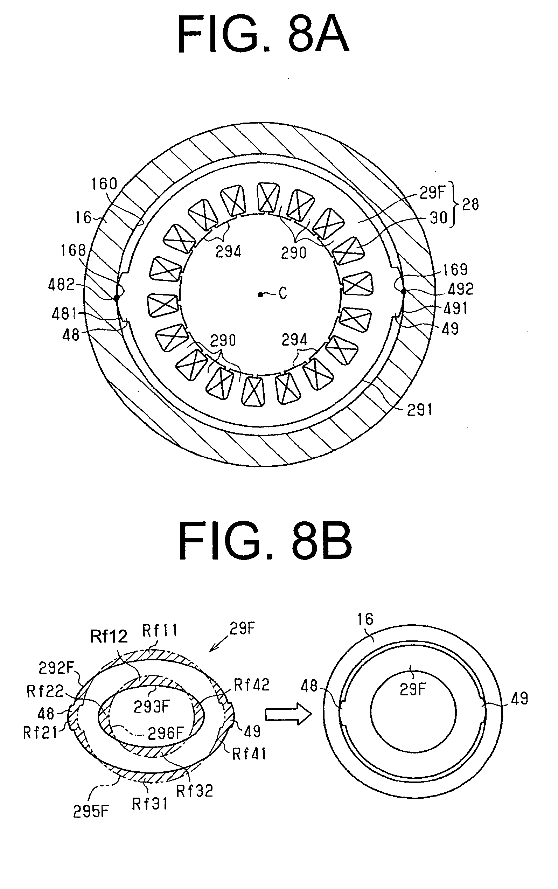

The following will describe a sixth preferred embodiment according to the present invention with reference to FIGS. 8A and 8B. The same reference numerals denote substantially similar components to those of the first preferred embodiment.

Referring to FIG. 8A, a stator core 29F has two supported projections 48 and 49 which are integrally formed on the outer peripheral surface 291 thereof. The supported projections 48 and 49 have distal end surfaces 481 and 491 which are formed in a circular arc shape having a curvature larger than that of the inner peripheral surface 160 of the motor housing 16. Thus, the distal end surfaces 481 and 491 are in contact at their centers 482 and 492 in width direction with the inner peripheral surface 160 of the motor housing 16. In other words, the stator core 29F is supported at two points of the outer periphery thereof by the contact parts 168 and 169 of the motor housing 16. The centers 482 and 492 of the distal end surfaces 481 and 491 are arranged in a similar manner as the centers 392 and 402 of the support projections 39 and 40 in the third preferred embodiment.

Referring to FIG. 8B, a solid annular line 292F indicates the cross-sectional shape of the outer peripheral surface 291 of the stator core 29F before the shrink fitting, and a solid annular line 293F is an annular line which overlaps with the distal end surfaces 294 of the teeth 290 before the shrink fitting. A dotted annular line 295F indicates the cross-sectional shape of the outer peripheral surface 291 of the stator core 29F after the shrink fitting, and a dotted annular line 296F is an annular line which overlaps with the distal end surfaces 294 of the teeth 290 after the shrink fitting. The annular line 296F indicates the shape of the inner peripheral surface of the stator core 29F after the shrink fitting.

Regions Rf11, Rf21, Rf31 and Rf41 indicated by oblique lines are regions corresponding to degree of the deformation of the outer peripheral surface 291 of the stator core 29F by the shrink fitting. Regions Rf12, Rf22, Rf32 and Rf42 indicated by oblique lines are regions corresponding to degree of the deformation of the inner peripheral surface of the stator core 29F by the shrink fitting. More specifically, the shape of the stator core 29F before the shrink fitting is determined by factoring pre-calculated degree of the deformation of the stator core 29F by the shrink fitting into the shape of the stator core 29F after the shrink fitting so that the shape of the inner periphery of the stator core 29F after the shrink fitting becomes close to a perfect circle.

The sixth preferred embodiment offers the same advantageous effects as mentioned in the paragraph (1) of the first preferred embodiment.

The present invention may be practiced as exemplified bellow.

(1) The number of support projections which are formed on the inner peripheral surface of the motor housing may be five or more.

(2) The number of supported projections which are formed on the outer peripheral surface of the stator core may be five or more.

(3) In the structure in which the support projections provided in the motor housing are in contact with the outer peripheral surface of the stator core, the outer peripheral surface of the stator core may have a shape other than a circumferential shape.

(4) In the structure in which the support projections provided in the motor housing are in contact with the outer peripheral surface of the stator core, the inner peripheral surface of the housing may have a shape other than a circumferential shape.

(5) The distal end surfaces of the support projections in the motor housing may have such a shape that the distal end surfaces are in surface contact with the outer peripheral surface of the stator core.

(6) The distal end surfaces of the supported projections in the stator core may have such a shape that the distal end surfaces are in surface contact with the inner peripheral surface of the motor housing.

(7) The present invention is applicable to an electric motor in which coils are wound around a rotor core which is connected on a rotary shaft.

(8) The present invention is applicable to a piston type compressor. In this case, a piston corresponds to a compression motion body of the present invention.

Therefore, the present examples and embodiments are to be considered as illustrative and not restrictive, and the invention is not to be limited to the details given herein but may be modified within the scope of the appended claims.

An electric motor includes an annular housing and an annular stator core having the inner periphery the shape of which differs from a perfect circle. The stator core is supported by the housing in such a manner that the outer periphery of the stator core and the inner periphery of the housing are partially in contact with each other. The inner periphery of the stator core is deformed to become close to the shape of the perfect Circle when the stator core is securely fitted in the housing by shrink fitting.

## Claims

1. An electric motor (26) including:

   an annular housing (16); and
   an annular stator core (29, 29D, 29E, 29F) having the inner periphery (294) the shape of which differs from a perfect circle, the stator core (29, 29D, 29E, 29F) being supported by the housing (16) in such a manner that the outer periphery (291, 412, 422, 432, 442, 452, 462, 472, 482, 492) of the stator core (29, 29D, 29E, 29F) and the inner periphery (160, 322, 332, 342, 352, 362, 372, 382, 392, 402) of the housing (16) are partially in contact with each other,

   **characterized in that**;
   the inner periphery (294) of the stator core (29, 29D, 29E, 29F) is deformed to become close to the shape of the perfect circle when the stator core (29, 29D, 29E, 29F) is securely fitted in the housing (16) by shrink fitting.

2. The electric motor (26) according to claim 1, wherein a shape of the stator core (29, 29D, 29E, 29F) before the shrink fitting is determined by factoring degree of deformation of the stator core (29, 29D, 29E, 29F) by the shrink fitting so that the shape of the inner periphery (294) of the stator core (29, 29D, 29E, 29F) after the shrink fitting becomes close to the perfect circle.

3. The electric motor (26) according to any one of claims 1 and 2, wherein the housing (16) has a plurality of projections (32, 33, 34, 35, 36, 37, 38, 39, 40) which are provided on the inner peripheral surface (160) of the housing (16) and circumferentially spaced at intervals, the projections (32, 33, 34, 35, 36, 37, 38, 39, 40) being in contact with the outer peripheral surface (291) of the stator core (29, 29D, 29E, 29F).

4. The electric motor (26) according to claim 3, wherein the shape of the stator core (29, 29D, 29E, 29F) before the shrink fitting is an elliptic cylindrical shape, the projections (32, 33, 34, 35, 36, 37, 38, 39, 40) being four projections (32, 33, 34, 35) which include a first pair of adjacent projections (32, 33) and a second pair of adjacent projections (34, 35), intervals between the first pair and between the second pair being smaller than those between one of the first pair and one of the second pair adjacent to each other and between the other of the first pair and the other of the second pair adjacent to each other, the elliptic cylindrical shape having a major axis (L1) which extends between the first pair of adjacent projections (32, 33) and between the second pair of adjacent projections (34, 35).

**5.** The electric motor (26) according to claim 3, wherein the shape of the stator core (29, 29D, 29E, 29F) before the shrink fitting is an elliptic cylindrical shape having a major axis, the projections (32, 33, 34, 35, 36, 37, 38, 39, 40) being two projections (39, 40) which are spaced at even angular intervals, the major axis passing through the centers of the projections (39, 40).

**6.** The electric motor (26) according to claim 3, wherein the shape of the stator core (29, 29D, 29E, 29F) before the shrink fitting has a plurality of large radius portions in cross-section, the projections (32, 33, 34, 35, 36, 37, 38, 39, 40) being spaced at even angular intervals and corresponding to the large radius portions after the shrink fitting, respectively.

**7.** The electric motor (26) according to claim 6, wherein a number of the projections (32, 33, 34, 35, 36, 37, 38, 39, 40) is three, a number of the large radius portions being three.

**8.** The electric motor (26) according to any one of claims 1 and 2, wherein the stator core (29, 29D, 29E, 29F) has a plurality of projections (41, 42, 43, 44, 45, 46, 47, 48, 49) which are provided on the outer peripheral surface (291) of the stator core (29, 29D, 29E, 29F) and circumferentially spaced at intervals, the projections (41, 42, 43, 44, 45, 46, 47, 48, 49) being in contact with the inner peripheral surface (160) of the housing (16).

**9.** The electric motor (26) according to claim 8, wherein the shape of the stator core (29, 29D, 29E, 29F) before the shrink fitting is an elliptic cylindrical shape, the projections (41, 42, 43, 44, 45, 46, 47, 48, 49) being four projections (41, 42, 43, 44) which include a first pair of adjacent projections (41, 42) and a second pair of adjacent projections (43, 44), intervals between the first pair and between the second pair being smaller than those between one of the first pair and one of the second pair adjacent to each other and between the other of the first pair and the other of the second pair adjacent to each other, the elliptic cylindrical shape having a major axis (L3) which extends between the first pair of adjacent projections (41, 42) and between the second pair of adjacent projections (43, 44).

**10.** The electric motor (26) according to claim 8, wherein the shape of the stator core (29, 29D, 29E, 29F) before the shrink fitting is an elliptic cylindrical shape having a major axis, the projections (41, 42, 43, 44, 45, 46, 47, 48, 49) being two projections (48, 49) which are spaced at even angular intervals, the major axis passing through the centers of the projections (48, 49).

**11.** The electric motor (26) according to claim 8, wherein the shape of the stator core (29, 29D, 29E, 29F) before the shrink fitting has a plurality of large radius portions in cross-section, the projections (41, 42, 43, 44, 45, 46, 47, 48, 49) being spaced at even angular intervals and corresponding to the large radius portions after the shrink fitting, respectively.

**12.** The electric motor (26) according to claim 11, wherein a number of the projections (41, 42, 43, 44, 45, 46, 47, 48, 49) is three, a number of the large radius portions being three.

**13.** The electric motor (26) according to any one of claims 1 through 12, the electric motor (26) being used for a motor-driven compressor (26), the motor-driven compressor (26) comprising;
a rotary shaft (12) driven to rotate by the electric motor (26);
a rotor (27) provided on the rotary shaft (12) in the housing (16) and facing the stator core (29, 29D, 29E, 29F); and
a compression motion body (11) driven by the rotation of the rotary shaft (12) for compressing a gas in a compression chamber and discharging the gas therefrom.

**14.** A method of manufacturing an electric motor (26) having an annular stator core (29, 29D, 29E, 29F) and an annular housing (16),
**characterized by**:

forming the stator core (29, 29D, 29E, 29F) having the inner periphery (294) the shape of which differs from a perfect circle; and
securing the stator core (29, 29D, 29E, 29F) to the housing (16) in such a manner that the inner periphery (294) of the stator core (29, 29D, 29E, 29F) is deformed to become close to the shape of the perfect circle by shrink fitting.

**15.** The method according to claim 14, wherein the forming step includes determining a shape of the stator core (29, 29D, 29E, 29F) before the shrink fitting by factoring degree of deformation of the stator core (29, 29D, 29E, 29F) by the shrink fitting so that the shape of the inner periphery (294) of the stator core (29, 29D, 29E, 29F) after the shrink fitting becomes close to the perfect circle.

**16.** The method according to any one of claims 14 and 15, further comprising the step of providing, after the step of forming the stator core (29, 29D, 29E, 29F), a plurality of projections (32, 33, 34, 35, 36, 37, 38, 39, 40, 41, 42, 43, 44, 45, 46, 47, 48, 49) circumferentially spaced at intervals on one of the inner peripheral surface (160) of the housing (16) and the outer peripheral surface (291) of the stator core (29, 29D, 29E, 29F).

17. The method according to claim 16, wherein the providing step includes providing the projections (32, 33, 34, 35, 36, 37, 38, 39, 40, 41, 42, 43, 44, 45, 46, 47, 48, 49) circumferentially spaced at even intervals.

18. The method according to any one of claims 16 and 17, wherein the forming step includes forming the stator core (29, 29D, 29E, 29F) in a shape of an elliptic cylindrical shape.

19. The method according to claim 18, wherein the providing step including providing four projections (32, 33, 34, 35, 41, 42, 43, 44) which include a first pair of adjacent projections (32, 33, 41, 42) and a second pair of adjacent projections (34, 35, 43, 44) so that intervals between the first pair and between the second pair are smaller than those between one of the first pair and one of the second pair adjacent to each other and between the other of the first pair and the other of the second pair adjacent to each other, the elliptic cylindrical shape having a major axis (L1, L3) which extends between the first pair of adjacent projections (32, 33, 41, 42) and between the second pair of adjacent projections (34, 35, 43, 44).

FIG. 1

# FIG. 2A

# FIG. 2B

# FIG. 2C

# FIG. 3A

# FIG. 3B

# FIG. 4A

# FIG. 4B

# FIG. 5A

# FIG. 5B

# FIG. 6A

# FIG. 6B

# FIG. 7A

# FIG. 7B

# FIG. 8A

# FIG. 8B

**EP 1 833 139 A2**

**REFERENCES CITED IN THE DESCRIPTION**

**Patent documents cited in the description**

- JP 2005214160 A

- JP 2005127152 A